# EUROPEAN PATENT APPLICATION

(11) **EP 3 336 922 A1**
(43) Date of publication of application: **20.06.2018**
(21) Application number: 16203941.6
(22) Date of filing: 14.12.2016
(51) Int. Cl.: H01M 2/02, H01M 2/04, H01M 2/08, H01M 2/34

(54) **BATTERY**

(71) Applicant: Lithium Energy and Power GmbH & Co. KG, 70469 Stuttgart (DE)
(72) Inventor: Deromelaere, Gaetan, 70806 Kornwestheim (DE); Liebenow, Cornelius, 70372 Stuttgart (DE)
(74) Representative: Bee, Joachim

(57) **Abstract**

The invention regards a battery (1) comprising a first housing element (2) made from an electroconductive material, a second housing element (3) made from an electroconductive material, an isolating element (4) for electrically isolating the first housing element (2) and the second housing element (3), and a heat generation element (5) which is adapted to selectively generate heat, wherein the isolating element (4) is adapted to burn or melt in reaction to the heat generated by the heat generation element (5), and wherein the first housing element (2) and the second housing element (3) are biased to clamp the isolating element (4) in between and to come into contact as soon as the isolating element (4) is burned or melted.

## Description

### Prior art

The invention regards a battery. Particularly, the invention regards a battery comprising a discharging device for establishing an external shortcut in order to discharge the battery.

From the prior art, batteries are known. Further, discharging devices are known that allow to shortcut the battery. However, such discharging devices usually require a switching means for activating the shortcut. After activating the shortcut, high currents flow through the discharging device, particularly through the switching means. The high currents cause heat being generated inside the discharging device. This heat might damage the discharging device, particularly the switching means, such that reliable discharge of the battery cannot be performed.

### Disclosure of the invention

The inventive battery comprises a discharging device which allows enhanced heat dissipation. Particularly, the contact surface between components establishing the shortcut is increased. Therefore, the heat generated is reduced and the generated heat is distributed over a large area. Therefore, overheating is prevented.

The battery according to the invention comprises a first housing element and a second housing element. Both, the first housing element and the second housing element are made from an electroconductive material. Additionally, the battery comprises an isolating element and a heat generation element. The isolating element electrically isolates the first housing element and the second housing element. Particularly, the first housing element and the second housing element are connected to different electrical potentials of a battery cells. Therefore, the battery cell can supply electrical power via the first housing element and the second housing element. The heat generation element is adapted to selectively generate heat. Particularly, the heat generation element is adapted to provide a contact between the first housing element and the second housing element such that a shortcut is established. Said shortcut leads to high currents which generate heat. Therefore, the heat generation element preferably does not generate heat during normal operations of the battery. However, the heat generation element can be activated to generate heat. The isolating element is adapted to burn or melt in reaction to the heat generated by the heat generation element. In this way, the isolating element is destroyed such that a connection between the first housing element and the second housing element come into contact. This leads to an external shortcut which causes discharging of the battery cell electrically connected to the first housing element and second housing element. Further, the first housing element and the second housing element are biased to clamp the isolating element in between. Therefore, the isolating element is under pressure and holds the first housing element and the second housing element apart from each other. As soon as the isolating element is burned or melted, the first housing element and the second housing element come into contact.

The dependent claims contain advantageous embodiments of the present invention.

In a preferred embodiment, at least one battery cell is arranged between the first housing element and the second housing element. A voltage is applied between the first housing element and the second housing element by the battery cell. Therefore, the battery cell can supply electrical power to any further device and can be discharged by activating the heating element in order to destroy the isolating element. After activating the heating element, an electrical contact between the first housing element and the second housing element is established such that the battery cell is shortcut.

The isolating element preferably burns in a residue-free way. This allows a tight contact between the first housing element and the second housing element wherein no distracting remains of the isolating element are present. Particularly, the isolating element has to be activated via electrical energy. The energy required for activating the heating element is preferably supplied by the battery itself. Further, it is preferred that the isolating element has a melting point between 90°C and 150°C, particularly between 100°C and 140°C.

The isolating element preferably is made from polyethylene and/or polypropylene. Those materials allow electrical isolation on the one hand and can simply be destroyed due to heat. Therefore, these material provide best requirements for designing an antifuse switch that establishes an electrical connection by burning or melting the isolating element, wherein in normal operations the isolating element reliably isolates the first housing element and the second housing element from each other.

Further preferred, the isolating element is made from wax-like materials. Melting the wax requires energy. In case that the first housing element and the second housing element are shortcut, the high currents flowing do not only generate heat but do also melt the wax-like materials. This leads less heat generated such that the risk of overheating the battery or a single battery cell is reduced.

The isolating element particularly comprises a main body made from polyethylene and/or polypropylene and comprising cavities, wherein the cavities are filled with wax-like materials. Therefore, the advantages as described above both apply. Particularly, the main body separates the first housing element and the second housing element until being destroyed by the heating element, wherein the wax-like material lowers the temperature of the battery in case of a shortcut in that energy is required for melting the wax-like material. The power required for melting the wax-like material can therefore not heat the battery.

Preferably, the heat generation element comprises an electrical switch, particularly a semiconductor switch. The switch can be closed in order to connect the first contact element and the second contact element. Therefore, an initial shortcut is generated. Said initial shortcut generates heat which melts or burns the isolating element such that the contact surface between the first housing element and the second housing element is increased. This reduces the electrical resistance and distributes the generated heat to a greater area such that overheating of the battery is avoided.

It is preferred that the first housing element and/or the second housing element are made from aluminum and/or steel. Therefore, the housing elements are heat resistant and allow conducting electrical currents. Further, the housing elements allow heat dissipation such that overheating of the battery is avoided.

The first housing element particularly is a container for containing at least one battery cell and the second housing element is a cap for closing the container. Hence, there is a circumferential contact area in which the first housing element and the second housing element come into contact. Therefore, the above described isolating element is provided at said circumferential surface. In normal operation, the battery therefore can supply power via the first housing element and the second housing element. However, via activating the heat generation element, the isolating element is destroyed such that there is a circumferential contact between the first housing element and the second housing element which allows high currents to flow. Further, due to the large contact area, heat generated by the high currents can be dissipated.

In an alternative embodiment, the first housing element and the second housing element partly enclose at least one battery cell. This design is also called nutshell concept. The first housing element and the second housing element preferably overlap each other to fully enclose the battery cell. Preferably, the parts of the first housing and the second housing, which touch each other via the isolating element, are deformed in order to create the above mentioned biasing. Therefore, no further elements are necessary to provide a biasing force acting on the housing elements.

### Description of the drawings

In the following, specific embodiments of the invention will be described together with the attached drawings. In the drawings
- Figure 1: is a schematic view of a process of establishing a low resistance current path by shortcutting a battery according to any embodiment of the invention
- Figure 2: is a schematic view of a battery according to a first embodiment of the invention,
- Figure 3: is another two schematic views of the battery according to the first embodiment of the invention,
- Figure 4: is a schematic view of a battery according to a second embodiment of the invention,
- Figure 5: is another three schematic views of the battery according to the second embodiment of the invention, and
- Figure 6: is a schematic view of an isolating element of the battery of any embodiment of the invention.

### Embodiments of the invention

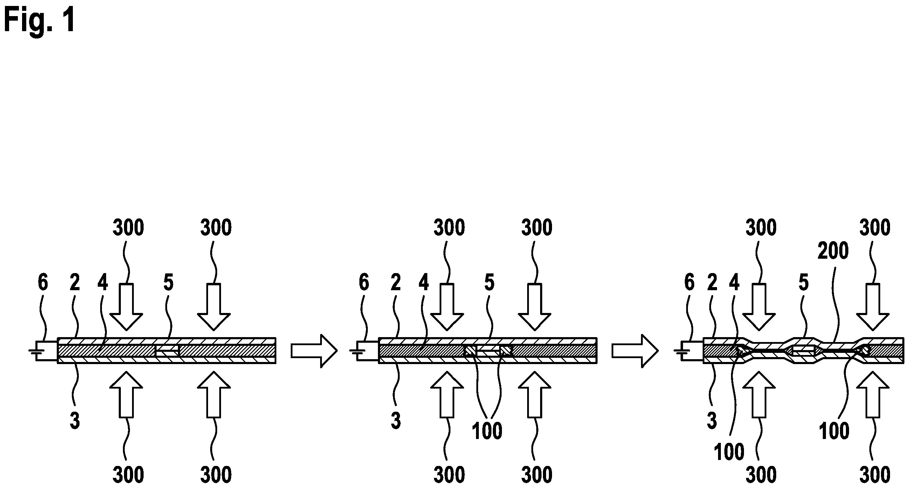

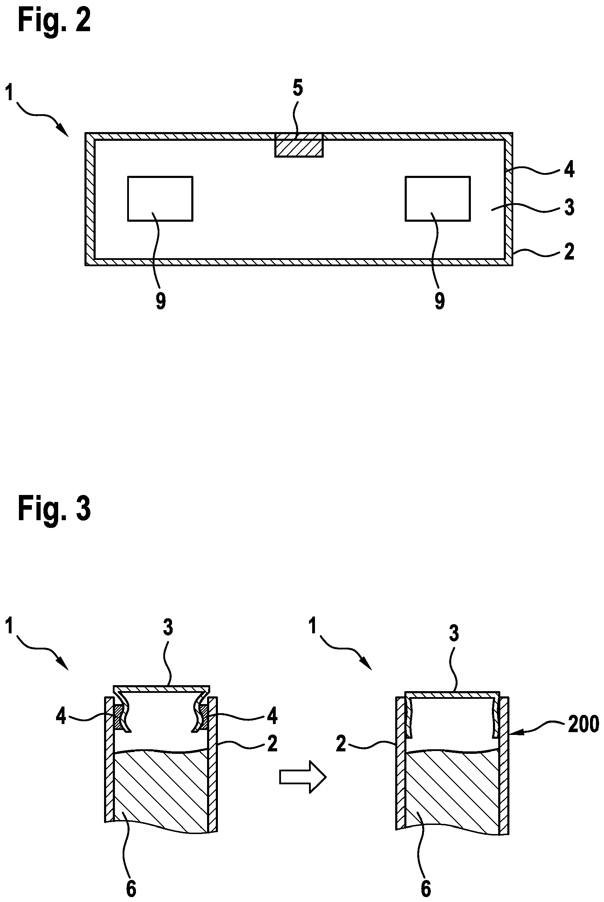

Figure 1 is a schematic view of a process of establishing a low resistance current path. Particularly, three sequent steps of electrically connecting a first housing element 2 and a second housing element 3 are shown. Such a process is adopted in any battery 1 described with reference to figures 2 to 5.

As can be seen from figure 1, the first housing element 2 and the second housing element 3 are separated from each other via an isolating element 4. The isolating element prevents electrical connection of the first housing element 2 and the second housing element 3.

Further, a heat generation element 5 is provided. The heat generation element 5 is a switch for establishing an initial shortcut between the first housing element 2 and the second housing element 3. As soon as the heat generation element 5 starts to generate heat 100, i.e. as soon as the switch is switched to electrically connect the first housing element 2 and the second housing element 3, the isolating element 4 is melt or burned due to heat 100.

The first housing element 2 and the second housing element 3 are pressed together via external force 300. Therefore, after melting or burning the isolating element 4, the first housing element 2 and the second housing element 3 are not separated any more and thus are pressed together along a contact area 200. This leads to electrical contact between the first housing element 2 and the second housing element 3. Therefore, the contact area 200 of the shortcut between the first housing 2 and the second housing 3 is increased. This leads to reduced heat generation such that overheating the battery 1 is prevented.

The mechanism of increasing the contact surface between the first housing element 2 and the second housing element 3 is preferably self-regulatory: As long as only a small contact surface is established heat 100 is generated which leads to melting or burning of the isolating element 4, such that the contact surface is increased. This continues until either the isolating element 4 is completely melt or burned or the contact surface is big enough so that no heat capable of burning or melting the isolating element 4 is generated.

Figure 2 is a schematic top view of a battery 1 according to a first embodiment. Figure 3 is a schematic side view of the battery 1 according to the first embodiment, wherein on the left side, the battery 1 including the isolating element 4 and on the right side the battery 1 after melting or burning the isolating element 4 is shown.

The battery 1 has prismatic shape and a container or can for housing battery cells (6), which is closed via a cap. The container corresponds to the first housing element 2, wherein the cap corresponds to the second housing element 3. The second housing element 3 further comprises cell terminals 9

Between the first housing element 2 and the second housing element 3, the isolating element 4 is provided. As can be seen from figure 3, the second housing element 3 is elastically deformed in order to create the external force 300 acting on the isolating element 4. Therefore, the second housing element 3 tends to get in contact with the first housing element 2, which is prevented via the isolating element 4.

Further, the heat generation element 5 is provided in order to initially establish a shortcut between the first housing element 2 and the second housing element 3. Therefore, heat 100 can be generated due to the shortcut current. The heat 100 leads to melting or burning of the isolating element 4 such that the first housing element 2 and the second housing element 3 get into contact along the contact area 200 as described above.

The isolating element 4 is provided circumferentially around the second contact element 3. Therefore, the whole circumferential surface of the second contact element becomes the contact area 200 after completely melting or burning the isolating element 4. Hence, the contact area 200 is maximized such that the heat generated due to the external shortcut is minimized. Therefore, the battery 1 can be discharged without overheating the battery cells 6.

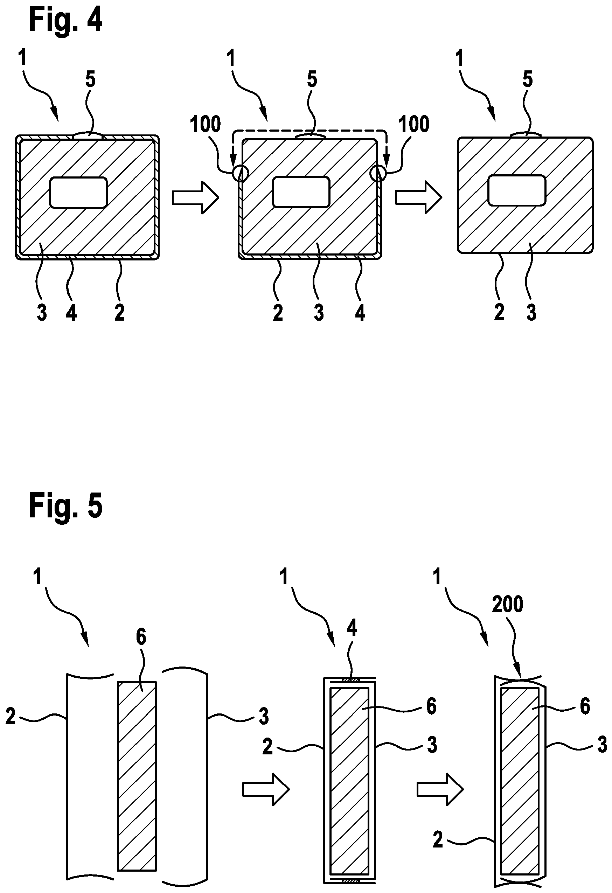

Figures 4 and 5 are schematic views of a battery 1 according to second embodiment of the present invention. In this embodiment, the nutshell concept is adopted. This means that a battery cell 6 is covered via the first housing element 2 and the second housing element 3 as shown in the side view of figure 5. The fist housing element 2 and the second housing element 3 are preferably made from steel or aluminum.

The first housing element 2 and the second housing element 3 are separated via the isolating element 4, wherein the fist housing element 2 and the second housing element 3 are elastically deformed in order to bias the isolating element 4. Hence, the first housing element 2 and the second housing element 3 tend to contact each other which is prevented via the isolating element 4. In this way, the force 300 is generated.

The battery 1 further comprises the heat generation element 5. Therefore, the same functionality as described with respect to figure 1 can be reached. This means that the heat generation element 5 provides an initial shortcut for generating heat 100. This heat 100 melts or burns the isolating element 4 and allows the first housing element 2 and the second housing element 3 to come into contact along the contact area 200. The same effects as above apply.

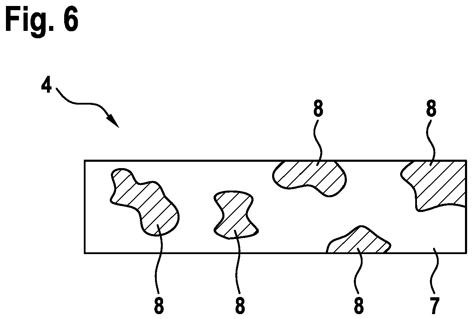

Figure 6 is a schematic view of an isolating element 4. The isolating element 4 comprises a main body 7. Preferably, the main body 7 is preferably made from polyethylene or from polypropylene. These materials allow residue-free burning in order to allow connection between the first housing element 2 and the second housing element 3. Further, in case the isolating element 4 is melted, the isolating element 4 has a melting point between 90°C and 150°C, particularly between 100°C and 140°C. Such a melting point allows reliable melting during shortcuts and reliable isolating functionality in case of no shortcut.

The main body 7 preferably further comprises 8 cavities including wax-like material. The wax-like material melts due to the generated heat 100, such that a cooling effect is provided. This leads to reduced temperature increase of the battery 1.

## Claims

1. Battery (1) comprising
• a first housing element (2) made from an electroconductive material,
• a second housing element (3) made from an electroconductive material,
• an isolating element (4) for electrically isolating the first housing element (2) and the second housing element (3), and
• a heat generation element (5) which is adapted to selectively generate heat,
• wherein the isolating element (4) is adapted to burn or melt in reaction to the heat generated by the heat generation element (5), and
• wherein the first housing element (2) and the second housing element (3) are biased to clamp the isolating element (4) in between and to come into contact as soon as the isolating element (4) is burned or melted.

2. Battery (1) according to claim 1, **characterized in that** at least one battery cell (6) is arranged between the first housing element (2) and the second housing element (3), wherein a voltage is applied between the first housing element (2) and the second housing element (3) by the battery cell (6).

3. Battery (1) according to any of the previous claims, **characterized in that** the isolating element (4) burns in a residue-free way and/or has a melting point between 90°C and 150°C, particularly between 100°C and 140°C.

4. Battery (1) according to any of the previous claims, **characterized in that** the isolating element (4) is made from polyethylene and/or polypropylene.

5. Battery (1) according to any of the previous claims, **characterized in that** the isolating element (4) is made from wax-like materials.

6. Battery (1) according to claim 4 and 5, **characterized in that** the isolating element (4) comprises a main body (7) made from polyethylene and/or polypropylene and comprising cavities (8), wherein the cavities are filled with wax-like materials.

7. Battery (1) according to any of the previous claims, **characterized in that** the heat generation element (5) comprises an electrical switch, particularly a semiconductor switch.

8. Battery (1) according to any of the previous claims, **characterized in that** the first housing element (2) and/or the second housing element (3) are made from aluminum and/or steel.

9. Battery (1) according to any of the previous claims, **characterized in that** first housing element (2) is a container for containing at least one battery cell (6) and the second housing element (2) is a cap for closing the container.

10. Battery (1) according to any of claims 1 to 8, **characterized in that** the first housing element (1) and the second housing element (3) partly enclose at least one battery cell (6), wherein the first housing element (2) and the second housing element (3) overlap each other to fully enclose the battery cell (6).
